# EUROPEAN PATENT APPLICATION

(11) **EP 1 726 573 A1**
(43) Date of publication of application: **29.11.2006**
(21) Application number: 04792046.7
(22) Date of filing: 05.10.2004
(51) Int. Cl.: C03C 4/00, C03C 3/11, G01N 21/03

(54) **ULTRA-VIOLET RAY TRANSMITTING GLASS AND MICROPLATE USING THE SAME**

(30) Priority: 06.10.2003 JP 2003346660
(71) Applicant: Nippon Sheet Glass Company, Limited, Tokyo 105-8552 (JP)
(72) Inventor: FUJITA, Koji, c/o Nippon Sheet Glass Company, Ltd, Tokyo, 1058552 (JP); YOSHII, Tetsuro, Nippon Sheet Glass Company, Ltd, Tokyo, 1058552 (JP); SONODA, Takahiro, Nippon Sheet Glass Company, Ltd, Tokyo, 1058552 (JP)
(74) Representative: Hart Davis, Jason
(86) International application number: PCT/JP2004/014635
(87) International publication number: WO 2005/033031

(57) **Abstract**

Ultraviolet ray transmitting glass including the following components, in terms of mass%: 65 to 79% SiO₂; 1 to 2% Al₂O₃; 0 to 10% B₂O₃; 0 to 10% MgO; 0 to 10% CaO; 0 to 15% SrO; 5 to 15% Na₂O; 0 to 15% K₂O; 0.002% or less (indicated in terms of Fe₂O₃) of total iron oxide; 0.002% or less TiO₂; and 0.1 to 3% Cl. This ultraviolet ray transmitting glass can have the characteristics of an ultraviolet ray transmittance of at least 40% with respect to a wavelength in the range of 240 to 300 nm when having a thickness of 1 mm and an average thermal expansion coefficient in the range of 50 to 350°C of 80 to 100 × 10⁻⁷/°C.

## Description

### Technical Field

The present invention relates to ultraviolet ray transmitting glass, particularly ultraviolet ray transmitting glass that is suitable for bioanalytical devices such as a microplate.

### Background Art

Recently, in order to increase the light intensity to improve the analytical precision, analysis to be carried out using ultraviolet light has been practiced widely in the field of, for instance, DNA analysis (for example, JP2002-171988A). In such an analysis, an organic solvent such as, for example, isooctane may be used in some cases. Accordingly, materials that are not dissolved in organic solvents need to be used for the analytical devices.

Conventionally, synthetic resin such as polystyrene generally is used as a material of devices to be used for the DNA analysis. Such synthetic resin has excellent processability but has a problem in resistance to organic solvents. When the resistance to organic solvents is improved, the synthetic resin tends to be difficult to transmit ultraviolet rays. Accordingly, such synthetic resin is not suitable for analyses to be carried out using ultraviolet rays. Examples of the material having a high resistance to organic solvents as well as a high ultraviolet ray transmittance include silica glass. This, however, is very difficult to process, which results in expensive devices.

An example of glass having a high ultraviolet ray transmittance is described in JP1(1989)-79035A, for example. This glass is ultraviolet ray transmitting glass that consists essentially of, in terms of wt%: about 58 to 82% SiO₂, 15 to 18% B₂O₃, 11.5 to 14.5% Al₂O₃, 1 to 2.5% LiO₂, 5.5 to 6.5% Na₂O, 1 to 2.0% K₂O, and 0 to 0.6% Cl. This glass has a thermal expansion coefficient (0 to 300°C) of 56 to 62 × 10⁻⁷/°C and its ultraviolet ray transmittance with respect to a wavelength of 254 nm of a 1 section is at least 80%.

The glass described in JP1(1989)-79035A has an outstanding ultraviolet ray transmittance but has a considerably lower thermal expansion coefficient than that of commercial soda-lime silica glass that is available at a low price. Hence, when such glasses are joined together, the joint part of the glasses tends to be distorted due to the difference in temperature therebetween and therefore it is difficult to maintain the strength of the joint part.

### Disclosure of Invention

With such a problem in mind, the present invention was made. The present invention is intended to provide ultraviolet ray transmitting glass that can be joined to common commercial soda-lime silica glass.

Ultraviolet ray transmitting glass of the present invention includes the following components, in terms of mass%: 65 to 79% SiO₂; 1 to 2% Al₂O₃; 0 to 10% B₂O₃; 0 to 10% MgO; 0 to 10% CaO; 0 to 15% SrO; 5 to 15% Na₂O; 0 to 15% K₂O; 0.002% or less of total iron oxide (indicated in terms of Fe₂O₃); 0.002% or less TiO₂; and 0.1 to 3% Cl.

The present invention makes it possible to provide ultraviolet ray transmitting glass having an ultraviolet ray transmittance of at least 40% with respect to a wavelength in the range of 240 to 300 nm when having a thickness of 1 mm and an average thermal expansion coefficient in the range of 50 to 350°C of 80 to 100 × 10⁻⁷/°C.

According to the present invention, ultraviolet ray transmitting glass can be obtained that has a thermal expansion coefficient that allows it to be used with common commercial soda-lime silica glass being joined thereto. This ultraviolet ray transmitting glass is excellent in resistance to organic solvents. It therefore is suitable for bioanalytical devices that utilize ultraviolet rays. Accordingly, when it is used for a container for bioanalyses such as a microplate, it is possible to combine the ultraviolet ray transmitting glass of the present invention that is used for the bottom plate alone and commercial sada-lime silica glass that is used for the part that requires complicated formation/processing. It therefore is possible to provide bioanalytical devices that are inexpensive in total.

### Brief Description of Drawings

FIG. 1 is a perspective view an example of the microplate including ultraviolet ray transmitting glass of the present invention.
FIG. 2 is a partial cross-sectional view of the microplate shown in FIG. 1.
FIG. 3 is a perspective view showing another example of the microplate including ultraviolet ray transmitting glass of the present invention.
FIG. 4 is a partial cross-sectional view of the microplate shown in FIG. 3.
FIG. 5 is a perspective view showing still another example of the microplate including ultraviolet ray transmitting glass of the present invention.
FIG. 6 is a perspective view showing yet another example of the microplate including ultraviolet ray transmitting glass of the present invention.
FIG. 7 is a partial cross-sectional view of the microplate shown in FIG. 6.

### Description of the Invention

In the ultraviolet ray transmitting glass of the present invention, its ultraviolet ray transmittance with respect to a wavelength in the range of 240 to 300 nm is preferably at least 40% when it has a thickness of 1 mm and its average thermal expansion coefficient in the range of 50 to 350°C is preferably 80 to 100 × 10⁻⁷/°C. In the bioanalysis to be carried out using ultraviolet rays, ultraviolet rays with a wavelength around 260 nm are used. Hence, it is desirable for the glass to have a high ultraviolet ray transmittance with respect to a wavelength at least in the range of 240 to 300 nm. In order to ensure detection accuracy, the ultraviolet ray transmittance with respect to a wavelength in the range of 240 to 300 nm is preferably at least 40%, further preferably at least 45%, and particularly preferably at least 50%. Moreover, it is preferable that the ultraviolet ray transmittance with respect to a wavelength in the range of 260 to 300 nm be at least 60%.

The intended use of the ultraviolet ray transmitting glass of the present invention is not limited. The ultraviolet ray transmitting glass, however, is suitable for a microplate since it has an ultraviolet ray transmittance around the range described above and high resistance to organic solvents. The ultraviolet ray transmitting glass of the present invention may be used for the part where ultraviolet rays with which a sample contained in a concave part of the microplate is irradiated pass through, i.e. the part that adjoins the bottom portion of the concave part.

From another aspect, the present invention provides a microplate having a concave part. The microplate is characterized in that a plate-like member that adjoins the bottom portion of the concave part includes the ultraviolet ray transmitting glass described above. This microplate further may include soda-lime silica glass that is joined to the plate-like member. Another microplate of the present invention has a concave part and is characterized in that the ultraviolet ray transmitting glass described above is included in a part through which light passes through, with the light entering from an opening of the concave part and passing through the bottom portion of the concave part.

When glasses are to be joined to each other, using glass for joining such as glass frit, the glass for joining is melted at 400 to 500°C, with which they are joined to each other. Glasses whose thermal expansion coefficients are different from each other are easy to join to each other when the difference in thermal expansion coefficient is not larger than 10 × 10⁻⁷/°C. The term "thermal expansion coefficient" used herein denotes an average thermal expansion coefficient (an average linear thermal expansion coefficient) in the range of 50 to 350°C. In order for the glass to be joined to common soda-lime silica glass, it is preferable that the thermal expansion coefficient be 80 to 100 × 10⁻⁷/°C, particularly 84 to 96 × 10⁻⁷/°C. The average thermal expansion coefficient in the range of 50 to 350°C of soda-lime silica glass varies slightly according to the composition thereof but generally is in the range of 85 to 95 × 10⁻⁷/°C.

The ultraviolet ray transmitting glass of the present invention has a thermal expansion coefficient in the above-mentioned range and therefore is suitable to be joined to soda-lime silica glass. Thus, the present invention further provides a glass article including the above-mentioned ultraviolet ray transmitting glass and soda-lime silica glass joined to the ultraviolet ray transmitting glass. This glass article is particularly useful for bioanalytical devices such as a microplate, but the intended use thereof is not limited thereto.

Next, the reasons for limiting the respective components of the preferable glass composition are described. The respective components described below are indicated by mass%.

SiO₂ is a main component of glass and is a component forming a skeleton of glass. When the content of SiO₂ is less than 65%, the glass has deteriorated durability. On the other hand, when the content of SiO₂ exceeds 79%, the glass higher viscosity, which results in difficulty in melting the glass. The content of SiO₂ is more preferably 69 to 73%.

Al₂O₃ is a component that prevents glass from devitrifying and improves durability of glass. An excessively large content of Al₂O₃, however, deteriorates the meltability of glass. Accordingly, it is preferable that the content of Al₂O₃ be 1 to 2%.

B₂O₃ is not an essential component but a component that decreases the melting temperature and improves the durability of glass. When the content of B₂O₃ is excessively large, the glass has increased variations in viscosity in a high-temperature range, which causes a problem in forming glass, and the volatilization volume of B₂O₃ also increases. Accordingly, it is preferable that the content of B₂O₃ do not exceed 10%. A more preferable range thereof is 0 to 3%.

Alkaline-earth metal oxides of MgO, CaO, and SrO are components that improve the durability of glass and can adjust the devitrification temperature and viscosity in forming glass as well as the thermal expansion coefficient of glass. When the contents of MgO, CaO, and SrO are excessively large, there are concerns that the devitrification temperature is high in forming glass, and the distortion of the Si-O bond increases in the glass and thereby the glass has a lower ultraviolet ray transmittance. Hence, it is preferable that the contents of MgO, CaO, and SrO do not exceed 10%, 10%, and 15%, respectively. More preferable ranges thereof are as follows: 0 to 4% MgO, 0 to 9% CaO, and 0 to 5% SrO. Furthermore, it is preferable that the total of the contents of MgO, CaO, and SrO be 2 to 12%.

Alkali metal oxides of Na₂O and K₂O are components that are used as an accelerator for melting glass and that vary particularly the thermal expansion coefficient. When the contents of Na₂O and K₂O are excessively large, it is conceivable that glass has deteriorated durability and the distortion of the Si-O bond increases in the glass and thereby the glass has a lower ultraviolet ray transmittance. Hence, it is preferable that both of them do not exceed 15%. In addition, since glass whose thermal expansion coefficient is closer to that of common commercial soda-lime silica glass can be obtained at a relatively low price, it is preferable that the content of Na₂O be at least 5%. More preferable ranges of them are as follows: 7 to 14% Na₂O and 0 to 10% K₂O. It also is preferable that the total of the contents of Na₂O and K₂O be 10 to 20%.

Iron Oxides exist in the form of FeO and Fe₂O₃ in glass. Particularly, Fe₂O₃ is a component that absorbs ultraviolet rays. Hence, it is preferable that Fe₂O₃ be not contained as much as possible. The content of iron oxides expressed in terms of Fe₂O₃ is preferably 0.002% or less (0 to 0.002%), more preferably 0.001% or less.

TiO₂ also is a component that absorbs ultraviolet rays. It therefore is preferable that TiO₂ be not contained as much as possible. The content of TiO₂ is preferably 0.002% or less (0 to 0.002%), more preferably 0.001% or less.

Chlorine (Cl) is a component that enters the skeleton of glass, restores the distorted Si-O bond in the glass that causes ultraviolet absorption, and allows higher ultraviolet ray transmittance to be obtained. Hence, it is preferable that the glass contain 0.1% to 3% Cl. An excessively large content of Cl may cause difficulty in producing glass. A more preferable range of the Cl content is 0.3 to 0.9%.

The ultraviolet ray transmitting glass of the present invention may include components other than those described above. It, however, is advantageous that the total content thereof be 5% or less, preferably 1% or less, more preferably 0.1% or less, further preferably 0.01% or less, and particularly preferably 0.001% or less. Examples of the components other than those described above include alkali metal oxides and alkaline-earth metal oxides other than those described above, oxides of Sb, Zn, Sn, etc. that are used as a defoamer, a colorant, an oxidizer, a reductant, etc., and F, C, SO₂, etc.

Preferably, the respective contents of Li₂O and BaO are limited in consideration of the environment, raw material cost, and effect on equipment. The content of Li₂O is preferably 3.8% or less, more preferably 0.1% or less while the content of BaO is preferably 0.5% or less, more preferably 0.1% or less. It is advantageous that the glass be substantially free from CeO₂ that is used as a colorant, particularly as an ultraviolet absorber. Specifically, the content thereof is preferably 0.01% or less, more preferably 0.001% or less.

Hereafter, the shape of a microplate is described as an example with reference to the drawings.

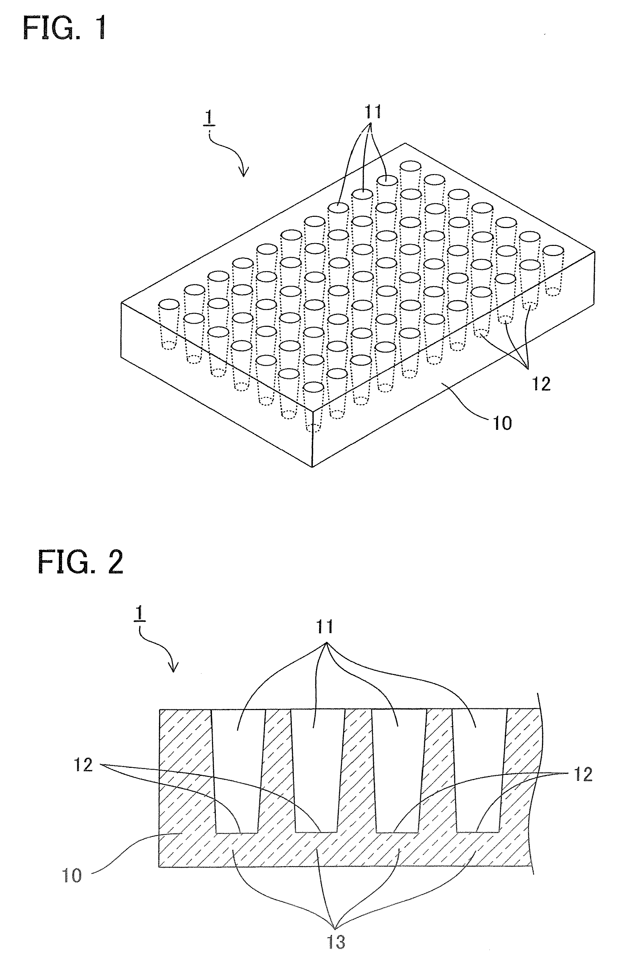

In a microplate 1 shown in FIGs. 1 and 2, concave parts 11 for retaining a sample to be analyzed or cultured are formed in the surface of an ultraviolet transmitting glass 10 of the present invention. The concave parts 11 are identical in shape to one another and are arranged in the surface of the glass 10 in the form of a matrix. Ultraviolet rays with which the sample retained in the concave parts 11 is irradiated fro the opening side of the concave parts 11 pass through the sample as well as the portions (light transmitting parts) 13 that adjoin the bottom portions 12 of the concave parts 11. The light transmitting parts 13 of the microplate 1 are formed of the ultraviolet ray transmitting glass 10. Accordingly, measurement is easy to carry out with high accuracy Furthermore, since all the portions that adjoin the concave parts 11 are formed of the ultraviolet ray transmitting glass 10, there is no concern about the resistance to organic solvents.

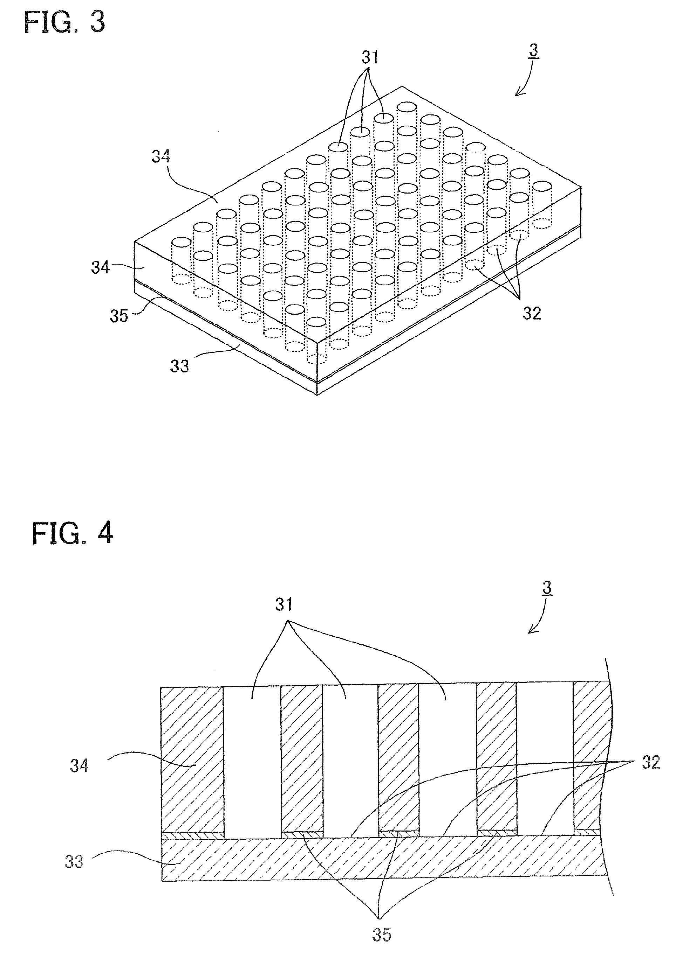

In a microplate 3 shown in FIGs. 3 and 4, a bottom plate 33 that adjoins bottom portions 32 of concave parts 31 and a molded member 34 that adjoins side portions of the concave parts 31 are joined to each other with a joint agent 35. A plate-like member formed of ultraviolet ray transmitting glass of the present invention is used for the bottom plate 33. On the other hand, glass, for example, soda-lime silica glass, in which through holes to serve as the concave parts 31 are formed is used for the molded member 34. A low-melting glass may be used for the joint agent 35, for example. The microplate 3 has a logical configuration in which the ultraviolet ray transmitting glass can be used for the part where importance is attached to the ultraviolet ray transmittance while a general-purpose material can be used for the part that needs to be processed. Even when the ultraviolet ray transmitting glass of the present invention and soda-lime silica glass are joined to each other by a method including heating, the problem that results from the difference in thermal expansion coefficient tends not to occur.

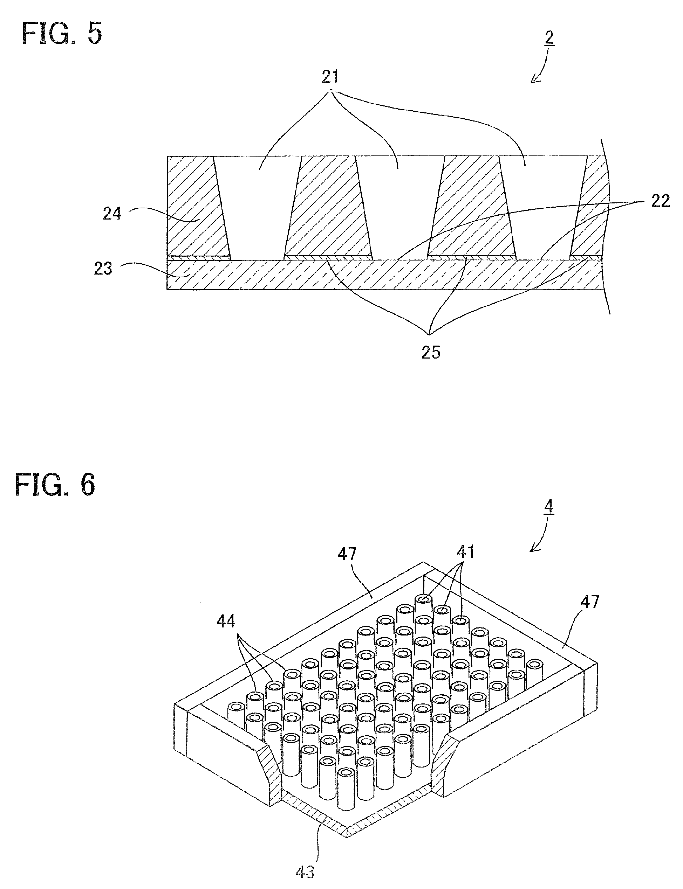

The shape of the concave parts is not particularly limited. It may be a shape of truncated cone (whose cross section is trapezoid) as shown in FIGs. 1 and 2 or may be a shape of rectangular parallelepiped (whose cross section is rectangle) as shown in FIGs. 3 and 4. From the viewpoint of facilitating the washing that is required when it is used repeatedly, an excellent shape of the concave part is one in which the area of the transverse section thereof decreases towards the bottom portion 12 like the former, the concave parts 11. In consideration of this, concave parts 21 with a shape of truncated cone may be formed in a microplate 2 including a bottom plate 23, a molded member 24, and a joint agent 25 (see FIG. 5).

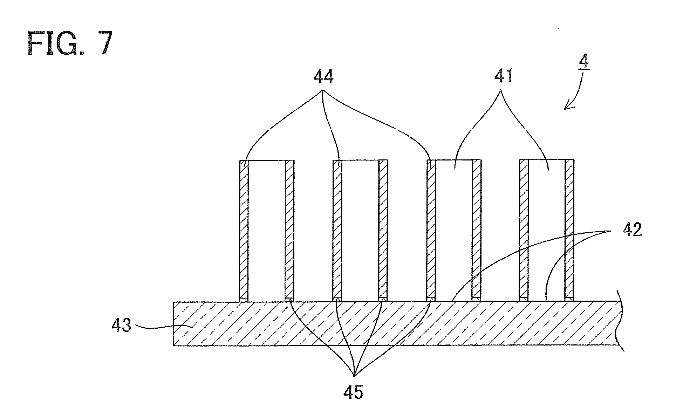

The microplates 1, 2, and 3 are not limited to the embodiments described above. For example, as shown in FIGs. 6 and 7, a microplate may be formed with a plurality of tubular members 44 joined to a bottom plate 43. In this microplate 4, the bottom plate 43 that adjoins bottom portions 42 of concave parts 41 is joined with an outer frame 47 and a plurality of tubular members 44 that adjoin the side portions of the concave parts 41, with a joint agent 45. A plate-like member formed of the ultraviolet ray transmitting glass of the present invention is used for the bottom plate 43. For example, soda-lime silica glass may be used for the tubular members 44 and the outer frame 47. For the joint agent 45, low-melting glass may be used, for example. In order to prevent, for instance, an outflow of a sample, the outer frame 47 is disposed to surround the tubular members 44.

### Examples 1 to 6 and Comparative Example 2

In order to form glass in the ratios indicated in Table 1, high purity silicon dioxide containing a small amount of iron, dialuminum trioxide, diboron trioxide, calcium carbonate, magnesium carbonate, strontium carbonate, lithium carbonate, sodium carbonate, potassium carbonate, calcium chloride, and sodium chloride were mixed together and thereby a material was prepared. The material was put into a platinum crucible and was heated to 1470°C in an electric furnace to be melted. Thereafter, the molten glass was poured on a stainless steel plate and then was cooled gradually to room temperature. In order to determine respective physical properties, these glass samples were cut to a suitable size and were polished

Glass samples with a thickness of 1mm were subjected to the measurement of transmittance with respect to a wavelength of 240 to 300 nm using a spectral transmittance measurement device (a product of Shimadzu Corporation, UV-3100PC, MPC-3100). The average thermal expansion coefficient in the range of 50 to 350°C was measured using a contact-type measuring apparatus (a product of Rigaku Corporation, TAS-100, TMA-8140). These measurement results are shown in Table 1. With respect to the ultraviolet ray transmittance, the lowest transmittance among those obtained with respect to respective wavelengths of 240 to 300 nm was indicated.

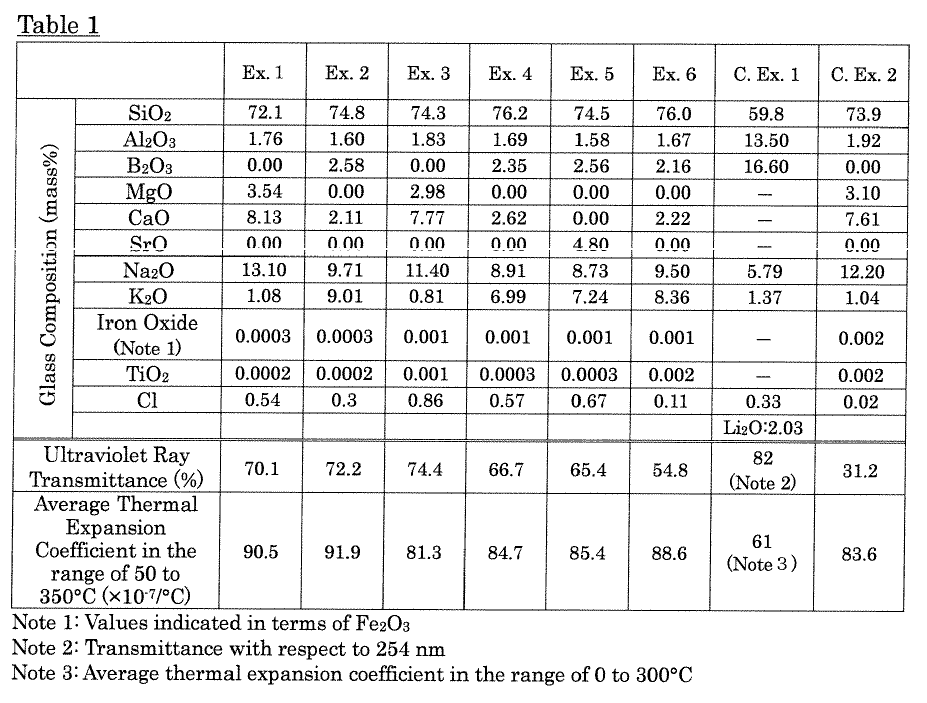

As is apparent from Table 1, all the examples had an ultraviolet ray transmittance of at least 50% with respect to 240 to 300 nm and an average thermal expansion coefficient in the range of 50 to 350°C of 80 to 100 × 10⁻⁷/°C. Thus, they each were glass that had both a high ultraviolet ray transmittance and a thermal expansion coefficient that allows it to be joined to common soda-lime silica glass.

On the other hand, Comparative Example 1, which was the glass described in JP1(1989)-79035A, was excellent in ultraviolet ray transmittance but the average thermal expansion coefficient thereof was 61 × 10⁻⁷/°C. Thus, the glass was one that was difficult to be joined to common soda-lime silica glass. Furthermore, Comparative Example 2 had a low ultraviolet ray transmittance, specifically 31% and therefore was glass that was not able to be used as ultraviolet ray transmitting glass.

### Industrial Applicability

The present invention provides ultraviolet ray transmitting glass that can be joined to common commercial soda-lime silica glass and therefore has a high utility value in the field of, for example, bioanalysis.

## Claims

1. Ultraviolet ray transmitting glass comprising the following components, in terms of mass%:
65 to 79% SiO₂;
1 to 2% Al₂O₃;
0 to 10% B₂O₃;
0 to 10% MgO;
0 to 10% CaO;
0 to 15% SrO;
5 to 15% Na₂O;
0 to 15% K₂O;
0.002% or less (indicated in terms of Fe₂O₃) of total iron oxide;
0.002% or less TiO₂; and
0.1 to 3% Cl.

2. The ultraviolet ray transmitting glass according to claim 1, wherein the content of the SiO₂ is 69 to 73% in terms of mass%.

3. The ultraviolet ray transmitting glass according to claim 1, wherein the content of the Cl is 0.3 to 0.9% in terms of mass%.

4. The ultraviolet ray transmitting glass according to claim 1, wherein the content of the B₂O₃ is 0 to 3% in terms of mass%.

5. The ultraviolet ray transmitting glass according to claim 1, wherein the total content of the MgO, CaO, and SrO is 2 to 12% in terms of mass%.

6. The ultraviolet ray transmitting glass according to claim 1, wherein the content of the Na₂O is 7 to 14% in terms of mass%.

7. The ultraviolet ray transmitting glass according to claim 1, wherein the total content of the Na₂O and K₂O is 10 to 20% in terms of mass%.

8. The ultraviolet ray transmitting glass according to claim 1, wherein the ultraviolet ray transmitting glass has an ultraviolet ray transmittance of at least 40% with respect to a wavelength in a range of 240 to 300 nm when having a thickness of 1 and an average thermal expansion coefficient in a range of 50 to 350°C of 80 to 100 × 10⁻⁷/°C.

9. A microplate comprising a concave part,
wherein a plate-like member that adjoins a bottom portion of the concave part includes ultraviolet ray transmitting glass according to claim 1.

10. The microplate according to claim 9, further comprising soda-lime silica glass joined to the plate-like member.

11. A microplate comprising a concave part,
wherein a part through which light passes includes ultraviolet ray transmitting glass according to claim 1, the light entering from an opening of the concave part and passing through a bottom portion of the concave part.

12. A glass article comprising ultraviolet ray transmitting glass according to claim 1 and soda-lime silica glass joined to the ultraviolet ray transmitting glass.
